# EUROPÄISCHE PATENTSCHRIFT

(11) **EP 1 841 312 B1**
(45) Veröffentlichungstag und Bekanntmachung des Hinweises auf die Patenterteilung: **15.04.2015**
(21) Anmeldenummer: 06705800.8
(22) Anmeldetag: 18.01.2006
(51) Int. Cl.: A01K 63/04, B01D 29/09, B01D 29/60, B01D 33/80

(54) **FILTERVORRICHTUNG, INSBESONDERE F]R FISCHBECKEN**
FILTERING DEVICE, IN PARTICULAR FOR A FISH BASIN
DISPOSITIF DE FILTRATION, EN PARTICULIER DESTINE A DES BASSINS A POISSONS

(30) Priorität: 28.01.2005 DE 202005001395 U
(43) Veröffentlichungstag der Anmeldung: 10.10.2007
(73) Patentinhaber: Rupp, Michael, 75180 Pforzheim (DE)
(72) Erfinder: Rupp, Michael, 75180 Pforzheim (DE)
(74) Vertreter: Wacker, Jost Oliver
(86) Internationale Anmeldenummer: PCT/DE2006/000061
(87) Internationale Veröffentlichungsnummer: WO 2006/079311

(56) Entgegenhaltungen:
- EP-A- 0 500 212
- US-A- 4 826 596
- US-A- 5 177 335

## Beschreibung

Die Erfindung betrifft eine Filtervorrichtung, insbesondere für Fischbecken.

### Stand der Technik

Es sind Filtervorrichtungen im Handel erhältlich, bei denen ein Filterband eingesetzt wird, das von dem zu reinigenden Wasser durchströmt wird, wobei sich Partikel über einer bestimmten Größe auf dem Filterband absetzen.

Das Filterband wird von einer Abgabewalze zu einer Aufnahmewalze geführt, wobei diese Bewegung entweder manuell vorgenommen werden muss, oder motorisch durch einen Schwimmer gesteuert, wenn der Wasserpegel im Filterraum über ein bestimmtes Maß steigt.

US 4,826,596 beschreibt eine Filtervorrichtung mit einem einen Filterraum umschließenden Gehäuse. Das Gehäuse weist eine im Filterraum gehaltene und mit der zu reinigenden Flüssigkeit beschickbare Filtertrommel auf, um die über einen Teil ihres Umfangs ein Filterband von einer Abgabewalze zu einer Aufnahmewalze geführt ist. Dabei ist die Bewegung des Filterbandes motorisch durch einen Schwimmer gesteuert, wenn der Flüssigkeitspegel im Filterraum über ein bestimmtes Maß steigt.

Die Filterleistung dieser bekannten Lösung ist nicht befriedigend, die Aufwicklung des Filterbandes von der Abgabewalze zur Aufnahmewalze erfordert entweder eine kontinuierliche Überwachung oder elektrische Energie und mit entsprechenden Anschlüssen.

### Darstellung der Erfindung

Aufgabe der Erfindung ist es, die Filterleistung der bekannten Filtervorrichtung zu verbessern und diese wartungsarm zu gestalten.

Erfindungsgemäß wird diese Aufgabe gemäß den Merkmalen des Schutzanspruchs 1 gelöst.

Der Grundgedanke der Erfindung besteht somit darin, dass sich bei zunehmender Verschmutzung des die Filtertrommel umschlingenden Filterbandes und daraus resultierendem ansteigenden Wasserpegel im Filterraum das von einer Pumpe zugeführte, ungereinigte Wasser über einen Überlauf auf das Schaufelrad als mechanisches Antriebsmittel ergießt und dieses eine Aufnahmewalze für das verschmutzte Filterband in Drehung versetzt.Dadurch wickelt die Aufnahmewalze mit ihrem Umfang das die Filtertrommel umschlingende Filterband kontinuierlich von der Abgabewalze auf, wodurch unverbrauchtes, für das zu reinigende Wasser durchlässiges, Filterband auf die Filtertrommel gelangt, die Filterwirkung wieder eintritt und der Wasserpegel wieder unterhalb des Überlaufs absinkt. Hierbei kann die Aufnahmewalze durch geeignete Federeinrichtungen vorgespannt werden.

Die zu diesem Regelvorgang erforderliche Energie wird daher ausschließlich auf mechanische Art und Weise von dem überströmenden Wasser erbracht.

Zweckmäßigerweise sind hierbei gemäß einer vorteilhaften Ausgestaltung Schaufelrad und Aufnahmewalze über einen Riemen miteinander verbunden, der über ein Getriebe geführt ist, das beispielsweise eine Untersetzung von etwa 1:100 aufweist, so dass hundert Umdrehungen des Schaufelrades in eine Umdrehung der Aufnahmewalze und eine ihrem Umfang entsprechende Förderlänge des Filterbandes umgesetzt werden.

Vorteilhafterweise befindet sich in der Filtertrommel ein biologisch aktives Filtermaterial (Bioreaktor), beispielsweise ein poröses Medium mit geeigneter Bakterienpopulation, das die mechanische Reinigung durch die Poren des Filterbandes ergänzt.

Weitere vorteilhafte Ausgestaltungen sind weiteren Unteransprüchen zu entnehmen.

### Kurze Beschreibung der Zeichnungen

Ein bevorzugtes Ausführüngsbeispiel der erfindungsgemäßen Filtervorrichtung wird nun anhand von Zeichnungen näher erläutert, es zeigen:

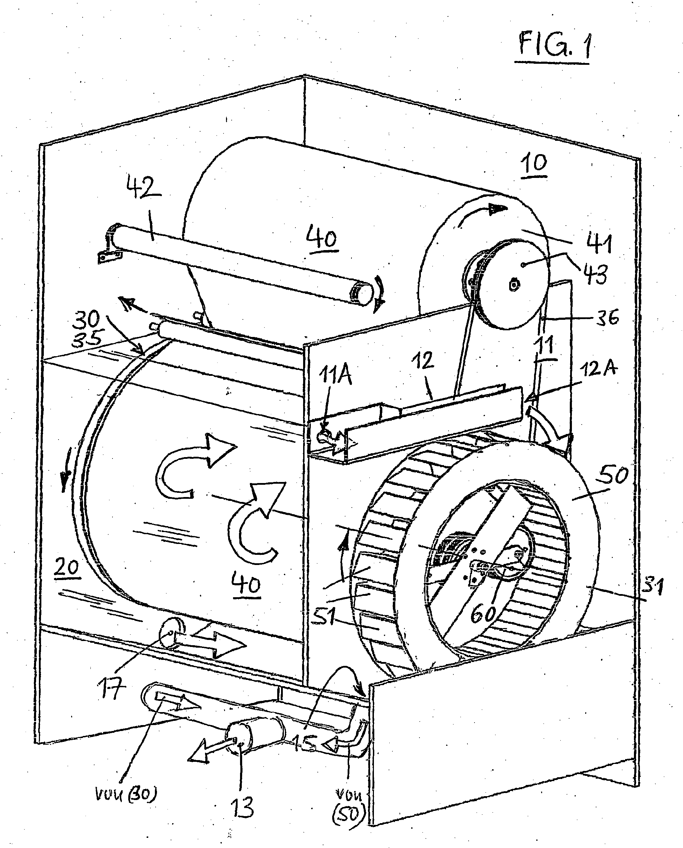

- Figur 1:: Eine perspektivische Ansicht der teilweise geöffneten Filtervorrichtung mit ihren wesentlichen Bauteilen,

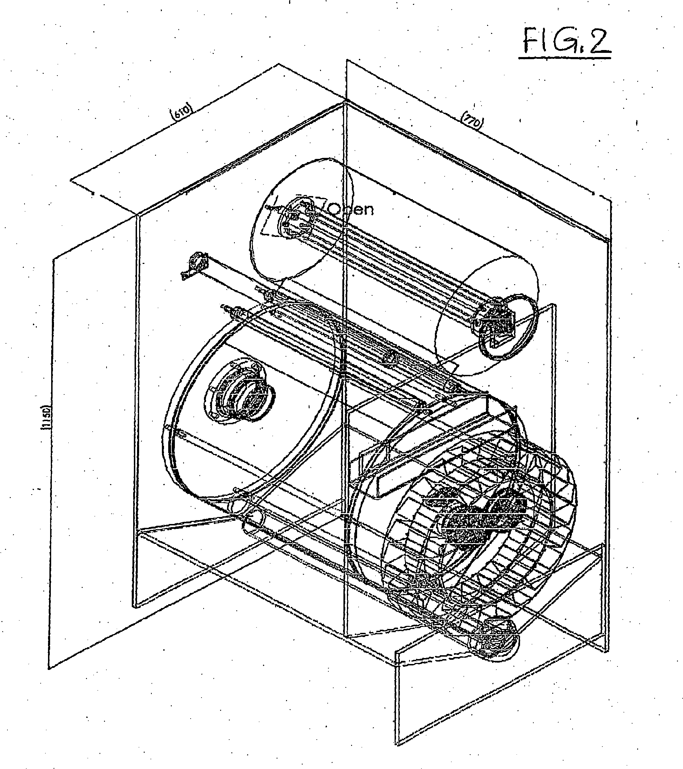

- Figur 2:: eine Ansicht gemäß Figur 2, bei der die Bauteile transparent dargestellt sind,

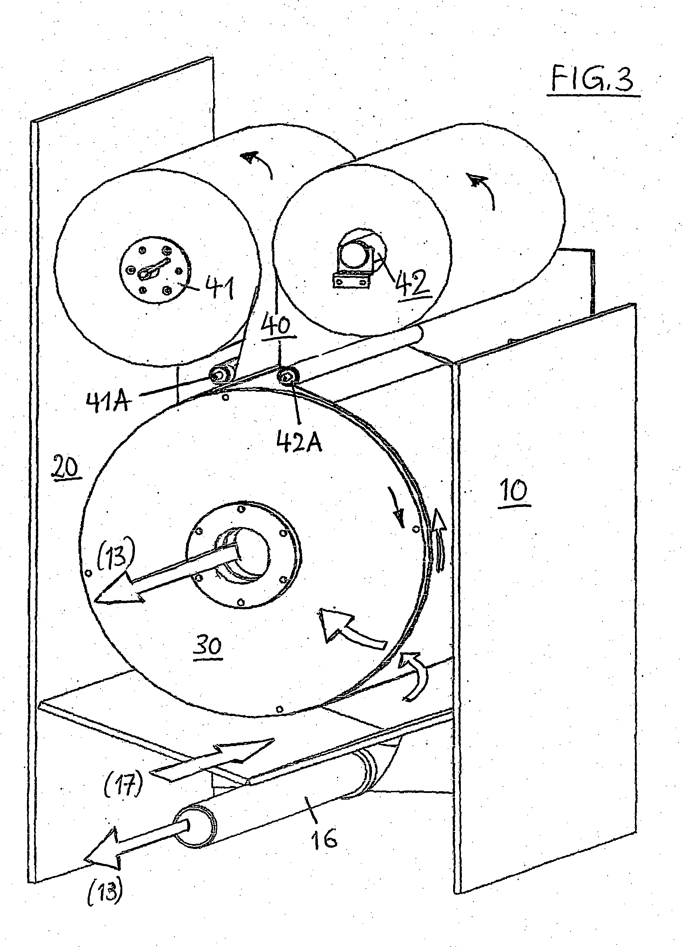

- Figur 3:: eine perspektivische Ansicht aus der dem Schaufelrad gegenüberliegenden Seite der Filtervorrichtung,

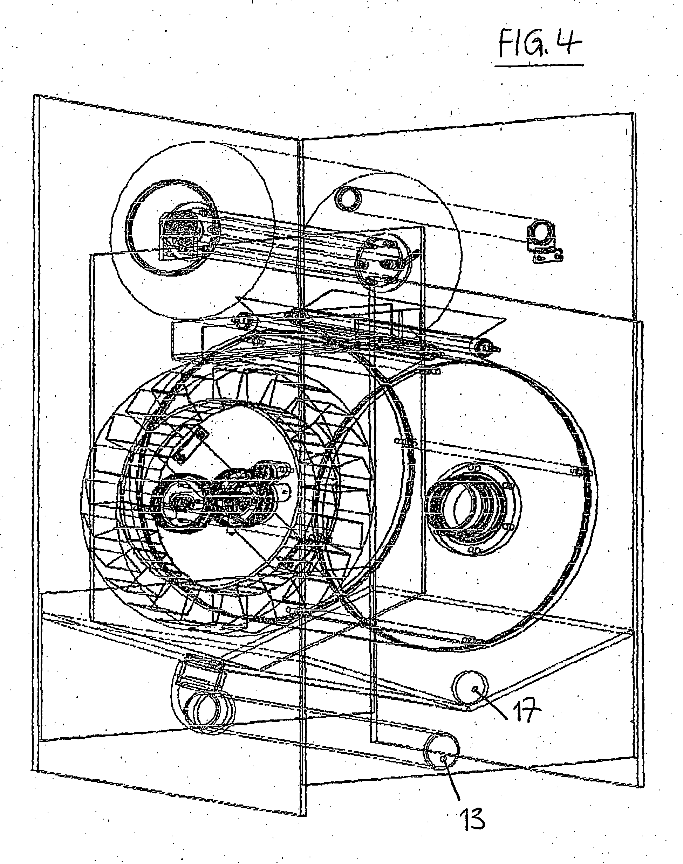

- Figur 4:: eine Ansicht gemäß Figur 3 mit transparent dargestellten Bauteilen,

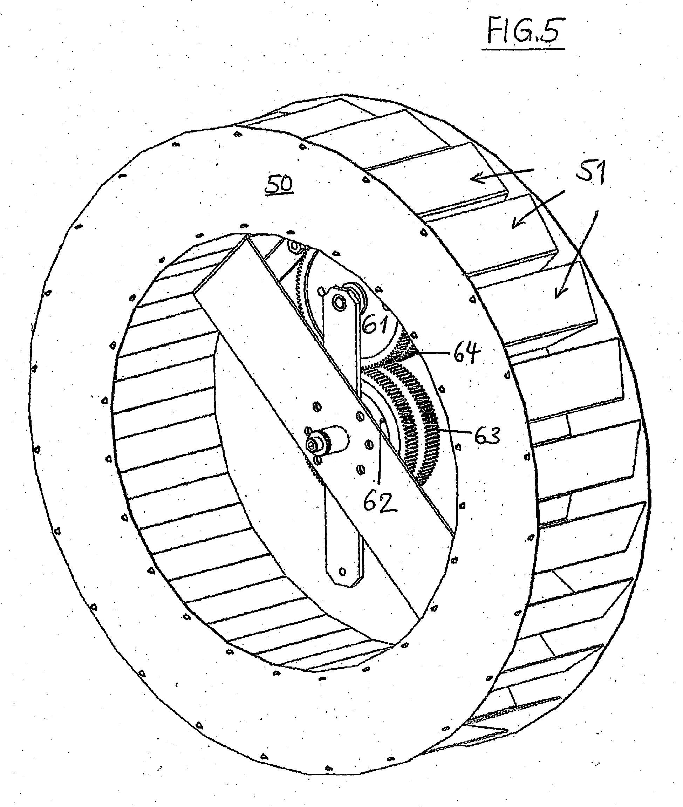

- Figur 5:: eine perspektivische Darstellung des Schaufelrades mit dem innen liegenden Getriebe,

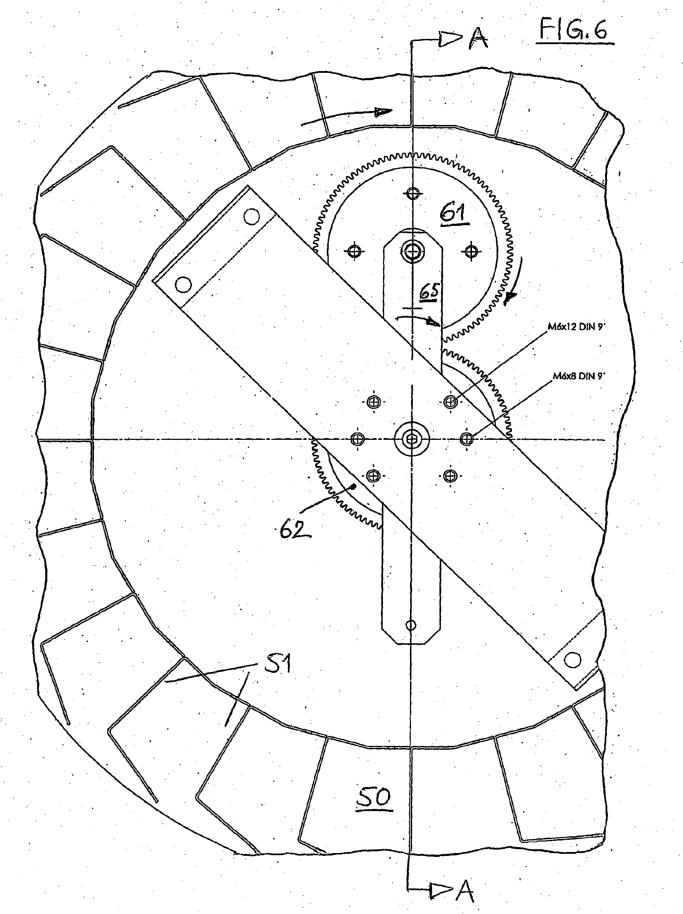

- Figur 6:: eine Teilansicht des Schaufelrades mit Getriebe, und

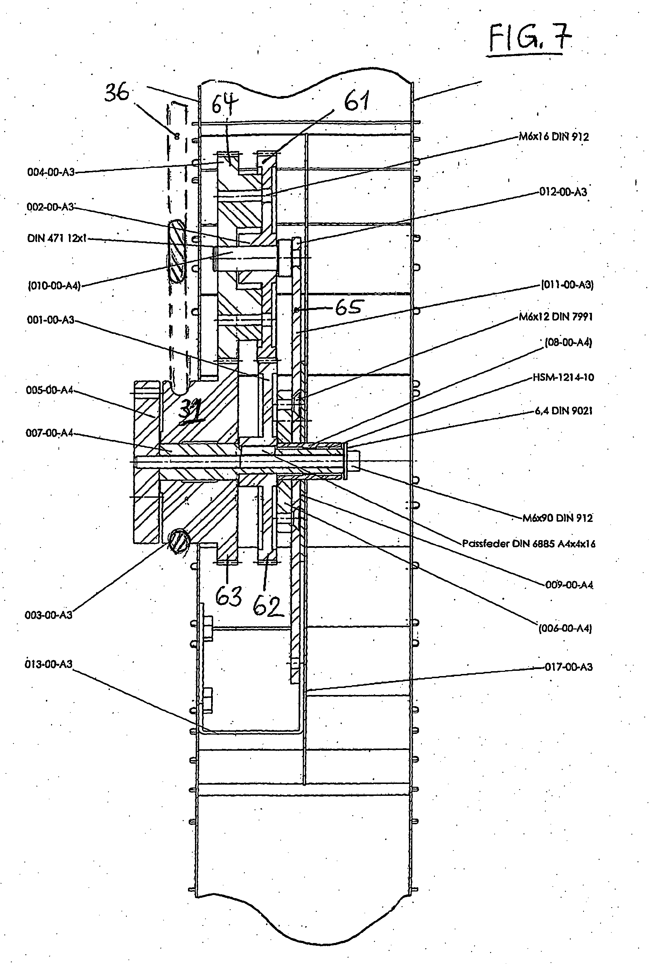

- Figur 7:: einen Schnitt durch das Schaufelrad mit dem Getriebe in der Ebene A-A der Figur 6,

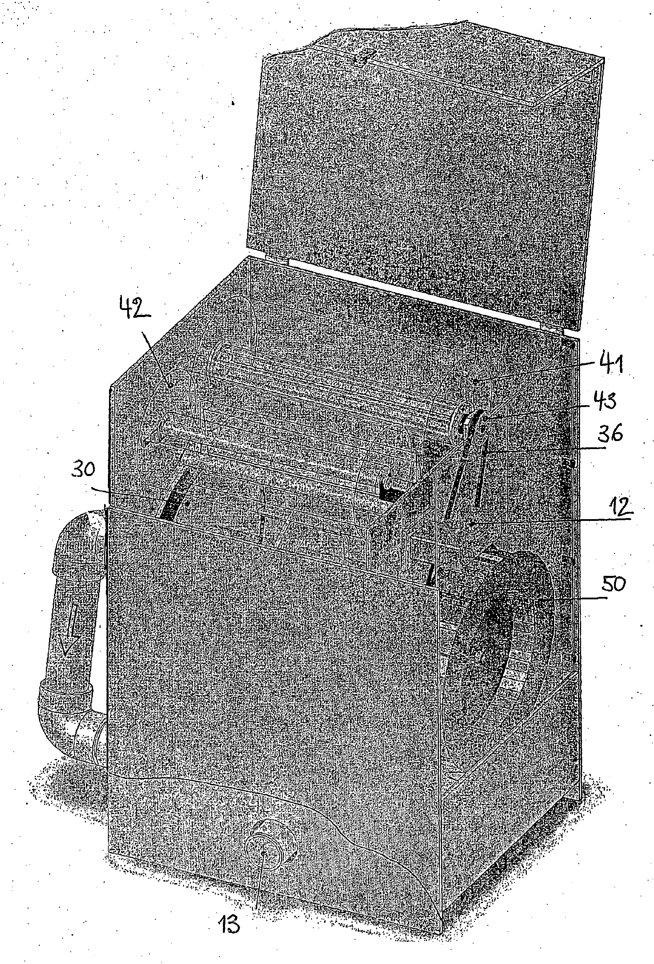

- Figur 8:: eine perspektivische Gesamtansicht bei geöffnetem Gehäusedeckel.

### Beschreibung des Ausführungsbeispiels

Die Filtervorrichtung besteht aus einem einen Filterraum 20 umschließenden Gehäuse 10, in dem eine Filtertrommel 30 horizontal um eine Achse drehbar gelagert ist. Die Wandung der Filtertrommel 30 besteht beispielsweise aus einem Lochblech oder einem Drahtgitter, so dass das zu reinigende Wasser vom Filterraum 20 in den Innenraum der Filtertrommel passieren kann. Der Innenraum der Filtertrommel ist mit bioaktivem Filtermaterial 35 aufgefüllt.

Oberhalb der Filtertrommel 30 und parallel zu dieser sind eine Aufnahmewalze 41 und eine Abgabewalze 42 im Gehäuse 10 drehbar gelagert. Abgabewalze 42 und Aufnahmewalze 41 dienen der Bereitstellung und der Förderung eines Filterbandes 40, das zwischen Abgabewalze 42 und Aufnahmewalze 41 die Filtertrommel 30 mit Hilfe von Umlenkwalzen 41A,42A um den wesentlichen Teil ihres Umfanges umschlingt.

Das verschmutzte Wasser vom Fischzuchtbecken wird über einen ersten Anschluss 17 (Einlass) in den Filterraum 20 eingeleitet, durchströmt das Filterband 40 und das Filtermaterial 35 und fließt über einen zweiten Anschluss (Auslauf) 13 ab.

Die Aufnahmewalze 41 ist mittels einer Riemenscheibe 43 über einen Riemen 36 mit einer auf der Achse eines Schaufelrad 50 mit Schaufeln 51 sitzenden Riemenscheibe 31 verbunden. Das Schaufelrad ist außerhalb des Filterraums 20 in einer Trennwand 11 des Gehäuses 10 gelagert. Oberhalb des Schaufelrads 50 befindet sich mit leichter Neigung zu ihrem Abgabeende 12A hin eine Rinne 12, die durch eine Überströmöffnung 11A mit dem Filterraum 20 verbunden ist, so dass bei Erreichen eines durch die Position der Überströmöffnung 11A definierten Pegelstandes des durch Verstopfung und/oder Filterkuchenbildung von Filtertrommel oder Filterband ungereinigten Wassers dieses über die Rinne 12 auf die Schaufeln 51 des Schaufelrades 50 geleitet wird und dieses in Drehung versetzt. Das überströmende, ungereinigte Wasser wird in einer Auffangwanne 15 unterhalb des Schaufelrades 50 gesammelt und über eine Rohrleitung zu dem in einer Seite des Gehäuses 10 befindlichen Auslauf 13 geleitet, von wo es zusammen mit dem gereinigten Wasser in das Fischzuchtbecken zurückgeführt wird.

Die Rotation des Schaufelrades 50 wird über ein Getriebe 60 mit einer Untersetzung von beispielsweise 1:100, das aus vier Zahnrädern 61...64 gebildet ist, auf die erste Riemenscheibe 31 übertragen; hierbei ist das erste Zahnrad 61 an einem Mitnehmer 65 gelagert und wälzt sich bei der Drehung des Schaufelrades 50 auf dem feststehenden inneren zweiten Zahnrad 62 ab. Koaxial zum ersten Zahnrad 61 und mit diesem fest verbunden ist das vierte Zahnrad 64 gehalten, wobei die Anzahl der Zähne der beiden Zahnräder 61 und 64 im Beispiel 100:101 beträgt, woraus sich das gewünschte Untersetzungsverhältnis von 1:100 ergibt. Das vierte Zahnrad 64 kämmt seinerseits mit dem koaxial zum ersten Zahnrad 61 gehaltenen dritten Zahnrad 63, so dass auf diese Art und Weise eine Drehung des Schaufelrades 50 um hundert Umdrehungen zu einer vollen Umdrehung des dritten Zahnrades 63 führt, mit einem entsprechend übersetzten Drehmoment auf die erste Riemenscheibe 31 und über den Riemen 36 auf die zweite Riemenscheibe 43 auf der Achse der Aufnahmewalze 41. Bei Drehung des Schaufelrads 50 in Richtung des Pfeiles erfolgt somit eine entsprechende Weiterförderung des Filterbandes 40 von der Abgabewalze 42 zur Aufnahmewalze 41.

Die Funktion dieser Filtervorrichtung lässt sich wie folgt zusammenfassen:
Solange die dem Filterraum 20 zugeführte Menge pro Zeiteinheit des zu reinigenden Wassers vollständig unter Abscheidung von Schmutzpartikeln auf dem Filterband 40 in den Innenraum der Filtertrommel 30 gelangen kann, bleibt der Wasserpegel auf einem konstanten Wert unterhalb der Überströmöffnung 11 A und es gelangt ausschließlich gereinigtes/gefiltertes Wasser vom Abfluss 13 zurück ins Fischbecken.

Mit zunehmender Verschmutzung des Filterbandes 40 beim Betrieb reduziert sich die Aufnahmefähigkeit der Filtertrommel, der Wasserpegel des verschmutzten Wassers außerhalb der Filtertrommel steigt bis zur Überströmöffnung 11A; das überströmende Schmutzwasser versetzt das Schaufelrad 50 in Drehung, wodurch, wie oben beschrieben, der durch Ablagerungen zugesetzte Abschnitt des Filterbands 40 auf die Aufnahmewalze 41 gewickelt und durch einen neuen Abschnitt von der Abgabewalze 42 ersetzt wird. Das überströmende Schmutzwasser wird dabei ebenfalls wieder dem Fischbekken zugeführt.

Mit zunehmender Durchlässigkeit der Filtertrommel infolge des zugeführten, unverbrauchten Filterbandmaterials steigt der Anteil des gereinigten Wassers wieder, der Pegelstand im Filterraum 20 sinkt wieder unter die Überströmöffnung 11A , das Schaufelrad 50 bleibt stehen.

Dieser Regelzyklus wiederholt sich.

Die Gestaltung des Antriebs des Filterbandes 40 durch das Schaufelrad 50 mittels eines Regelkreises ist eine mechanisch einfache vollautomatische Lösung, mit der die erfindungsgemäße Filtervorrichtung unter einer eindeutigen Funktionskontrolle des sich drehenden Schaufelrades einfach zu betreiben ist, und die zudem auch optische Reize durch die Anlehnung des technischen Designs an ein Mühlrad bietet.

### Bezugszeichenliste

- 10: Gehäuse
- 11: Trennwand
- 11A: Öffnung
- 12: Rinne
- 12A: Abgabeende
- 13: Auslauf-Anschluss
- 14: zweiter Anschluss
- 15: Auffangwanne
- 16: Rohrleitung
- 17: Einlass-Anschluss
- 30: Filtertrommel
- 31: erste Riemenscheibe
- 35: Filtermaterial
- 40: Filterband
- 41: Aufnahmewalze
- 41A,42A: Umlenkwalzen
- 42: Abgabewalze
- 43: zweite Riemenscheibe
- 50: Schaufelrad
- 51: Schaufeln
- 60: Getriebe
- 61: erstes Zahnrad
- 62: zweites Zahnrad
- 63: drittes Zahnrad
- 64: viertes Zahnrad
- 65: Mitnehmer

## Patentansprüche

1. Filtervorrichtung, insbesondere für Fischbecken, mit einem einen Filterraum (20) umschließenden Gehäuse (10), mit einer im Filterraum (20) drehbar gehaltenen, mit dem zu reinigenden Wasser beschickbaren Filtertrommel (30), um die über einen Teil ihres Umfangs ein Filterband (40) von einer Abgabewalze (42) zu einer Aufnahmewalze (41) geführt ist,
**dadurch gekennzeichnet, dass** die Aufnahmewalze (41) von einem außerhalb des Filterraums (20) angeordneten Schaufelrad (50) antreibbar ist, dessen Schaufeln (51) von sich über einen Überlauf des Gehäuses (10) ergießendem, ungereinigtem Wasser beaufschlagbar sind, so dass das Filterband (40) von der Abgabewalze (42) auf die Aufnahmewalze (41) gewickelt wird.

2. Filtervorrichtung nach Anspruch 1, **dadurch gekennzeichnet, dass** zwischen Schaufelrad (50) und Aufnahmewalze (41) ein Getriebe (60) geschaltet ist:

3. Filtervorrichtung nach Anspruch 1 und 2, **dadurch gekennzeichnet, dass** zum Antrieb der Aufnahmewalze (41) eine dem Getriebe (60) nachgeschaltete, auf der Achse des Schaufelrads (50) angeordnete erste Riemenscheibe (31) und eine auf der Achse der Aufnahmewalze (41) angeordnete zweite Riemenscheibe (43) dient, über die einen Riemen (36) verbunden sind.

4. Filtervorrichtung nach Anspruch 2, **dadurch gekennzeichnet, dass** das Getriebe (60) eine Untersetzung von etwa 1:100 aufweist.

5. Filtervorrichtung nach Anspruch 1, **dadurch gekennzeichnet, dass** in der Filtertrommel (30) ein biologisch aktives Filtermaterial (35) ist.

6. Filtervorrichtung nach Anspruch 1, **dadurch gekennzeichnet, dass** die Zufuhr des zu reinigenden Wassers über einen Einlass-Anschluss (17) des Gehäuses (10) in den Filterraum (20) außerhalb der Filtertrommel (30) erfolgt.

7. Filtervorrichtung nach Anspruch 1, **dadurch gekennzeichnet, dass** unterhalb des Schaufelrads (50) und der Filtertrommel (30) eine Auffangwanne (15) angeordnet ist, von der das ungereinigte Wasser über eine Rohrleitung (16) zu einem dem Schaufelrad (50) gegenüberliegenden Auslauf-Anschluss (13) des Gehäuses (10) zum Fischbecken abgeführt wird.

8. Filtervorrichtung nach Anspruch 1 und Anspruch 7, **dadurch gekennzeichnet, dass** das gereinigte Wasser vom Innenraum der Filtertrommel (30) über eine Rohrleitung über den Auslauf-Anschluss (13) zum Fischzuchtbecken abgeführt wird.

9. Filtervorrichtung nach Anspruch 1, **dadurch gekennzeichnet, dass** eine Überlauf-Öffnung (11 A) in einer Trennwand (11) des Gehäuses (10) zwischen Filterraum (20) und Schaufelrad (50) über einer Führung (12) angeordnet ist, deren Abgabeende (12A) oberhalb des Schaufelrads (50) liegt.

10. Filtervorrichtung nach Anspruch 1, **dadurch gekennzeichnet, dass** Abgabewalze (42) und Aufnahmewalze (41) oberhalb der Filtertrommel (30) im Gehäuse (10) gehalten sind.

11. Filtervorrichtung nach Anspruch 1, **dadurch gekennzeichnet, dass** das Filterband (40) ein Papiervlies ist.

12. Filtervorrichtung nach Anspruch 1, **dadurch gekennzeichnet, dass** das Filtermaterial (35) ein poröses Medium mit Bakterien (Bioreaktor) ist.

## Claims

1. Filtering device, in particular for fish basins, comprising a housing (10) encompassing a filtration chamber (20), and a filtering drum (30) rotatably maintained in the filtration chamber (20), which is loadable with the water which is to be purified, around a part of the circumference of which a filtering strip (40) is guided from a delivering cylinder (42) to a receiving cylinder (41), which can be driven by a paddle wheel (50) arranged outside the filtration chamber (20), of which the paddles (51) are loaded by impure water in such a way that the filtering strip (40) is wound by the delivering cylinder (42) onto the receiving cylinder (41).

2. Filtering device according to claim 1, **characterized in that** a gear arrangement (60) is engaged between the paddle wheel (50) and the receiving cylinder (41).

3. Filtering device according to claim 1 and 2, **characterized in that**, for the drive of the receiving cylinder (41), a first belt pulley (31) is used, downstream of the gear arrangement (60) and arranged on the axle of the paddle wheel (50), and a second belt pulley (43) arranged on the axle of the receiving cylinder (41), which are connected by a belt (36).

4. Filtering device according to claim 2, **characterized in that** the gear arrangement (60) exhibits a reduction of some 1:100.

5. Filtering device according to claim 1, **characterized in that** in the filtering drum (30) is a biologically active filter material (35).

6. Filtering device according to claim 1, **characterized in that** the delivery of the water which is to be purified is effected via an inlet-outlet (17) of the housing (10) into the filtration chamber (20) outside the filtering drum (30).

7. Filtering device according to claim 1, **characterized in that** a catchment trough (15) is arranged beneath the paddle wheel (50) and the filtering drum (30), from which the impure water is conducted via a pipe (16) to an outlet connection (13) of the housing (10), located opposite the paddle wheel (50), to the fish basin.

8. Filtering device according to claim 1 and claim 7, **characterized in that** the purified water is conducted from the interior of the filtering drum (30) via a pipe, via the outlet connection (13) to the fish breeding basin.

9. Filtering device according to claim 1, **characterized in that** an overflow opening (11A) is arranged in a partition wall (11) of the housing (10) between filtration chamber (20) and paddle wheel (50) via a guide (12), the output end (12A) of which is located above the paddle wheel (50).

10. Filtering device according to claim 1, **characterized in that** delivering cylinder (42) and receiving cylinder (41) are held above the filtering drum (30) in the housing (10).

11. Filtering device according to claim 1, **characterized in that** the filtering strip (40) is a paper nonwoven material.

12. Filtering device according to claim 1, **characterized in that** the filter material (35) is a porous medium with bacteria (bioreactor).

## Revendications

1. Dispositif de filtration, en particulier destiné à des bassins à poisson, comprenant un boîtier (10) entourant une chambre de filtration (20), un tambour de filtration (30), qui est supporté de manière rotative dans la chambre de filtration (20), qui peut être chargé d'eau à purifier et autour duquel une bande filtrante (40) est guidée le long d'une partie de sa circonférence, à partir d'un rouleau distributeur (42) vers un rouleau collecteur (41),
**caractérisé en ce que** le rouleau collecteur (41) peut être entraîné par une roue à aubes (50) agencée à l'extérieur de la chambre de filtration (20), dont les aubes (51) peuvent être alimentées par de l'eau non-purifiée se déversant par un trop-plein du boîtier (10), de sorte que la bande filtrante (40) est enroulée du rouleau distributeur (42) au rouleau collecteur (41).

2. Dispositif de filtration selon la revendication 1, **caractérisé en ce qu'**un mécanisme de transmission (60) est monté entre la roue à aubes (50) et le rouleau collecteur (41).

3. Dispositif de filtration selon la revendication 1 ou 2, **caractérisé en ce qu'**on utilise, pour l'entraînement du rouleau collecteur (41), une première poulie à courroie (31) agencée sur l'axe de la roue à aubes (50) et montée en aval du mécanisme de transmission (60), et une seconde poulie à courroie (43) agencée sur l'axe du rouleau collecteur (41), lesquelles sont reliées par l'intermédiaire d'une courroie (36).

4. Dispositif de filtration selon la revendication 2, **caractérisé en ce que** le mécanisme de transmission (60) présente un rapport de réduction d'environ 1:100.

5. Dispositif de filtration selon la revendication 1, **caractérisé en ce qu'**un matériau de filtration (35) biologiquement actif se situe dans le tambour de filtration (30).

6. Dispositif de filtration selon la revendication 1, **caractérisé en ce que** l'arrivée d'eau à purifier s'effectue à travers un raccord d'entrée (17) du boîtier (10) dans la chambre de filtration (20) à l'extérieur du tambour de filtration (30).

7. Dispositif de filtration selon la revendication 1, **caractérisé en ce qu'**une cuve collectrice (15) est agencée en dessous de la roue à aubes (50) et du tambour de filtration (30), à partir de laquelle l'eau non-purifiée est évacuée du bassin à poissons par l'intermédiaire d'un tuyau (16) menant à un raccord de sortie (13) du boîtier (10), opposé à la roue à aubes (50).

8. Dispositif de filtration selon la revendication 1 ou la revendication 7, **caractérisé en ce que** l'eau purifiée provenant de la chambre intérieure du tambour de filtration (30) est évacuée vers le bassin d'élevage de poissons par l'intermédiaire d'un tuyau via le raccord de sortie (13).

9. Dispositif de filtration selon la revendication 1, **caractérisé en ce qu'**une ouverture de trop-plein (11A) est agencée dans une cloison (11) du boîtier (10) entre la chambre de filtration (20) et la roue à aubes (50) par l'intermédiaire d'une conduite (12), dont l'extrémité de décharge (12A) se situe au-dessus de la roue à aubes (50).

10. Dispositif de filtration selon la revendication 1, **caractérisé en ce que** le rouleau distributeur (42) et le rouleau collecteur (41) sont maintenus au-dessus du tambour de filtration (30) du boîtier (10).

11. Dispositif de filtration selon la revendication 1, **caractérisé en ce que** la bande filtrante (40) est un feutre en papier.

12. Dispositif de filtration selon la revendication 1, **caractérisé en ce que** le matériau de filtration (35) est un milieu poreux comprenant des bactéries (bioréacteur).
